# EUROPEAN PATENT APPLICATION

(11) **EP 1 160 787 A2**
(43) Date of publication of application: **05.12.2001**
(21) Application number: 01304471.4
(22) Date of filing: 22.05.2001
(51) Int. Cl.: G11B 20/10, G11B 19/00, G11B 27/00

(54) **Variable speed writing on a CD-R, CD-RW and DVD-RW media**

(30) Priority: 02.06.2000 US 586580
(71) Applicant: Hewlett-Packard Company, Palo Alto, CA 94304 (US)
(72) Inventor: Goldstein, Tim, Loveland, CO 80538 (US)
(74) Representative: Colgan, Stephen James

(57) **Abstract**

A system and method for writing to an optical media 112 are disclosed. In a preferred embodiment, a write controller 102 monitors the amount of data in an optical writer's buffer 108. The write controller further monitors the rate at which data is being supplied to the optical writer's buffer. The writer controller interacts with the laser optics 110 and servo 114 of the optical writer to dynamically adjust the speed at which data is written to the optical media based upon the amount of data in the optical writer's buffer and the rate at which data is being supplied to such buffer. In a preferred embodiment, the write controller decreases the write speed if the amount of data in the optical writer's buffer drops below a threshold amount. Moreover, in a preferred embodiment, the write controller decreases the write speed if the rate at which data is being supplied to the optical writer's buffer decreases below a threshold amount. Also, the write controller increases the write speed if the amount of data in the optical writer's buffer is above a "safe" threshold. Thus, rather than the write speed being locked into a set speed for the entire write to an optical media, the optical writer varies its write speed to provide optimum performance while also avoiding buffer underrun errors.

## Description

### TECHNICAL FIELD

The present invention related in general to writing to optical media, and in general to a system and method for writing to optical media at variable speeds.

### BACKGROUND

Optical discs, have become popular data storage mediums utilized for storing various types of data, including music, movies, computer programs, and other data. Generally, optical discs are storage mediums from which data is read and to which it is written by lasers. Typically, optical discs can store much more data -- e.g., 6 gigabytes (6 billion bytes) -- than most portable magnetic media, such as floppy disks. Optical discs comprise Compact Discs (CDs), such as CD-ROM, CD-RW (ReWritable CD), and DVD (Digital Versatile Disc or Digital Video Disc), such as DVD-ROM and rewritable DVD (e.g., DVD+RW).

Equipment is now available to users for writing or recording data to various types of optical discs. Optical disc writing is a real-time process which must run constantly at the selected recording speed, without interruptions. Most optical disc recorders typically have a buffer that is constantly filled with a reserve of data waiting to be written, so that small slowdowns or interruptions in the flow of data from the computer do not interrupt writing. Such a buffer is an amount of memory which temporarily stores data to help compensate for differences in the transfer rate of data from one device to another. That is, the buffer is utilized to store data from the source of such data, such as a hard disk or CD-ROM drive, and supply a continuous stream of data to be written or recorded to the optical disc. Such buffers are typically capable of storing anywhere from 1 megabyte to 2 megabytes of data.

Thus, data to be written to an optical media is generally transferred from the data's source to the optical writer's buffer and then the data is continuously written from the buffer to the optical media. Accordingly, the optical writer's buffer must be supplied data from the source as data is written from the buffer to the optical media to prevent the buffer from running out of data. From time to time, the data flow from the source to the buffer is interrupted, such that the buffer is not being supplied data as data is being written from the buffer to the optical media. If the flow of data from the source to the recorder is interrupted long enough for the recorder's buffer to be emptied, a "buffer underrun" error occurs. If such a buffer underrun error occurs during a write operation, the optical disc may be ruined.

Originally, the write speed for optical discs, such as CDs, was 1X speed or 150 kilobits per second. Such 1X speed was typically slow enough that the recorder's buffer usually did not run out of data unless the flow of data from the source to the buffer was interrupted for a fairly long period of time. However, more recent technology has been developed that significantly increases the write speeds available in drives (or recorders). New servos and laser technology is being utilized to allow write speeds of 2X (300 kilobits per second), 4X (600 kilobits per second), 8X (1200 kilobits per second), 12X (1800 kilobits per second), and 16X (2400 kilobits per second). With such increased speeds, and even faster write speeds that are sure to be accomplished in the future, a buffer underrun error becomes a much more significant problem. That is, as the write speed for optical discs increases it is much more likely that a buffer underrun error will occur because only a short interruption in the data flow from the source to the buffer will result in the buffer being depleted by the write to the optical disc.

Typically, when a buffer underrun error occurs, the media (i.e., optical disc) being written to is ruined. Once the stream of data being written to an optical disc is interrupted, the optical disc writer cannot figure out where it left off writing data and continue writing from that position. For example, assume that a user has 150 megabytes (MB) worth of data to be written to an optical disc. The optical disc writer starts with the first byte and continually writes the data in to the disc in a continuous stream of data without any breaks in the data. Suppose that in the middle of writing the data to the disc, a buffer underrun occurs. That is, the buffer runs out of data from which the optical disc writer may write. Because of the write speed, it is very hard for the laser to later sync (synchronize) up with the position at which the data ended. Optical discs do not have markers, as with floppy drives, to allow the optical disc writer to sync up with a previous end of data written to a disc. Because the optical disc writer is unable to sync up with a previous end of data, a buffer underrun may ruin the optical media if the optical media is only capable of being written to once.

When writing data to an optical disc, blanks or pauses (e.g., interruptions in the data flow to the optical disc) typically cannot be inserted into the disc. There are certain cases where blanks or pauses can be inserted in the disc, such as is done with session writing or track writing. However, pauses or blanks typically cannot be inserted during a session or a track. For example, blanks or pauses may be inserted between different sessions, but a blank or pause may not be inserted during a session. Accordingly, the buffer underrun error is a problem that must be avoided even during session or track writing.

As explained above, a buffer underrun ruins optical media that can only be written to once. Thus, if a buffer underrun error occurs when writing or recording to an optical disc that can only be written to once, the media is ruined and cannot be reused. Rewritable optical discs also exist, such as CD-RW and DVD+RW. For such rewritable optical discs, data typically must be "blanked" (i.e., erased) and then the disc may be reused. Typically, such rewritable discs have a limitation on the number of times to which the disc may be written (e.g., 1000 times). Additionally, blanking (or erasing) the disc counts as a write to the disc. Thus, if a buffer underrun occurs when writing to a rewritable disc for the first time, the disc may be blanked, which will count as a second write to the disc. After being blanked, the disc may be written to again, which will count as a third write to the disc. Accordingly, the incurring buffer underrun errors can result in the rewritable media reaching its limit on the number of writes and becoming unusable much faster than with a floppy, for example.

The buffer underrun problem is further enhanced today because most machines being used to record data to optical discs are not dedicated only to that specific task. Rather, such systems are typically personal systems that have e-mail, screen savers, internet access, games, and other processes executing on them. These types of processes can tie up the I/O (input/output) on the Bus or the processor and cause delays in data flow to the buffer, resulting in buffer underruns. That is, having multiple processes running on a system occupies the I/O Bus to the point where the buffer is starved for data. For example, the system going out and checking a user's e-mail or a screen saver becoming active can tie up the processor enough that a buffer underrun occurs. Recall that as write speeds increase, only a short interrupt in the data flow from the source to the buffer is needed to cause a buffer underrun.

Most users generally want to write or record to an optical disc as fast as possible. So, users generally will perform a test of their system right after it is installed to determine the fastest write speed the system can handle (e.g., 2X, 4X, 8X, etc.). The system may work fine at first. However, as the user's hard drive becomes fragmented, as new applications are installed on the system that run in the background taking up resources, or as various other conditions detract from the processor time required for supplying the necessary data flow to the buffer, the system begins incurring buffer underrun problems. To correct the buffer underrun problem, the user must then reduce the write speed set for the system. Thus, in the prior art a user sets 1 speed, at which the system will continually use to write to optical media until changed by the user. Through a trial and error process of incurring buffer underruns, a user must adjust the system's write speed setting to find a speed that is reliable. As a result, user's are often forced to set the write speed at one that is much lower than the system's capability to avoid buffer underrun errors.

It should be understood that the write speed (e.g., 1X, 2X, 4X, 8X, etc.) determines how fast data is written or recorded to an optical disc, but the write speed does not effect the density or storage space of the optical disc. For example, suppose a CD is capable of storing 650 megabytes (MB) of data. Such CD may have 650 MB of data written to it at 1X speed, or it may have the same amount of data written to it at 2X speed. The difference is that the 650 MB of data will be written to the CD much faster at the 2X speed.

Optical media players used to retrieve data from optical media, as opposed to write data to optical media, also exist in the prior art. In reading data from an optical media, the optical drive typically stores data from the optical media to the optical drive's buffer, and then the data is extracted from the buffer to the source requesting the data. In retrieving data from the optical media to the buffer, it is important to avoid a "buffer overrun," wherein data is being placed into the buffer from the optical media at a faster rate than such data is being extracted from the buffer by the requesting source. In other words, if data is being supplied to the buffer from the optical media at a faster rate than the data is being extracted from the buffer, then at some point the buffer will become full and the optical drive will have no place for the data being retrieved from the optical media.

Prior art optical drives have circuitry that monitors the buffer as the data is written to it by the optical media and extracted from it by the requesting source. Such monitoring circuitry either increases or decreases the speed of the servo to control the speed at which data is being written from the optical media to the buffer to prevent a buffer overrun. Typically, such monitoring circuitry attempts to maintain the buffer at approximately 50% full. For example, assume the buffer is 50% full and some process on the system interrupts data being extracted from the buffer to the requesting source. As a result, data is being supplied to the buffer from the optical media, but data is not being extracted from the buffer by the requesting source. To avoid a buffer overrun, the monitoring circuitry decreases the servo speed, thus decreasing the speed at which data is being supplied to the buffer. Now assume that the interruption ends and the data begins being extracted from the buffer by the requesting source at a faster rate than the data is being supplied to the buffer by the optical media. In response, the monitoring circuitry will increase the servo speed and resume supplying data to the buffer at a fast rate.

As described above, no such monitoring circuitry is available in the prior art for controlling the write speed to an optical media based on the amount of data in the optical writer's buffer. Rather, prior art optical writer's are set to a specific speed, and write to an optical media at only such set speed. Thus, prior art optical writer's do not vary their write speeds depending on the amount of data in the optical writer's buffer.

### SUMMARY OF THE INVENTION

Several problems exist with the prior art system and method for writing data to optical discs. As technological advances increase the speed at which data may be written to optical discs, the possibility of buffer underruns increases. Users typically want to write data to an optical disc at the fastest speed possible. Accordingly, a user typically sets the write speed for the user's system at the fastest speed that the system can handle. However, other processes running on the system or other conditions (e.g., fragmented data on the user's hard drive) may interrupt the flow of data from the source to the buffer, resulting in a buffer underrun. Thereafter, the user would have to adjust the write speed to prevent incurring further buffer underrun errors. Thus, prior art optical disc writing systems do not vary the write speed when writing to an optical media. Rather, the optical disc writing systems of the prior art write at a particular set speed for the entire write to an optical media. Prior art optical disc writers do not adjust or vary their write speeds depending on the amount of data in the buffer. As a result, users typically must set the prior art optical disc writers to a speed below that which the writers are capable of writing to avoid buffer underrun errors.

In view of the above, there exists a desire for a method and system for writing data to an optical media. There is a further desire for a method and system for writing data to an optical media which allows the data to be written at the fastest speed possible while also working to reduce buffer underrun errors. There exists a further desire for a method and system for writing data to an optical media wherein the write speed is variable depending on the amount of data remaining in the buffer. There exists yet a further desire for a method and system for writing data to an optical media wherein such data is written to the media at the maximum speed possible when sufficient data is available in the buffer, and such data is written to the media at slower speeds as the amount of data available in the buffer decreases. There exists still a further desire for a method and system for performing variable speed writing to an optical media wherein such speed is dependent at least in part on the rate at which data is being supplied to the optical writer's buffer.

These and other objects, features and technical advantages are achieved by a system and method which performs variable speed writing to an optical media. In a preferred embodiment, the speed of writing to an optical media is adjusted depending on the amount of data residing in the recorder's buffer and the rate at which data is being supplied to the recorder's buffer.

Accordingly, in a preferred embodiment, the drive changes write speeds dynamically depending on the rate at which data is being supplied to the buffer. If the buffer is receiving data fast enough for the drive to write at a high speed, the drive will write at such high speed, but as soon as the drive notices that the data rate has dropped, it will slow down the write process and write at a slower speed.

Thus, a user is not required to set a write speed for the drive and worry about other applications or other objects on the system interrupting the data flow to the drive at the set write speed. Instead, the drive (or optical media writer) adjusts its write speed depending on the rate at which data is being supplied to the buffer. That is, the drive writes to the optical media at the fastest possible speed as long as sufficient data is being supplied to the buffer, but if the rate at which data is being supplied to the buffer decreases (e.g., is interrupted for a period of time) the drive automatically adjusts its speed to a slower speed. Accordingly, when data interruption occurs for the data being supplied from the source to the buffer, the drive adjusts to a slower write speed to reduce the possibility of incurring a buffer underrun. Thus, instead of the buffer running empty, the drive adjusts to a slower write speed in an attempt to allow the buffer to "catch up" or be replenished.

It should be appreciated that a technical advantage of one aspect of the present invention is that a system and method for writing data to an optical media are provided wherein the speed at which such data is written is variable. Thus, the write speed may be dynamically adjusted during the write process, instead of being locked into a set write speed. Further, it is a technical advantage of one aspect of the present invention that a system and method for writing data to an optical media are provided wherein the write speed is dependent upon the rate at which data is being supplied to the optical writer's buffer. Accordingly, the optical writer can write to an optical media at the optimum speed possible while also reducing the possibility of incurring buffer underrun errors.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### BRIEF DESCRIPTION OF THE DRAWING

For a more complete understanding of the present invention, and the advantages thereof, reference is now made to the following descriptions taken in conjunction with the accompanying drawing, in which:
FIGURE 1 shows a preferred embodiment in block form of a system for writing to an optical disc at variable speeds; and
FIGURE 2 shows an exemplary flow diagram for writing to an optical disc at variable speeds depending on the amount of data and the rate of change in data in the buffer.

### DETAILED DESCRIPTION

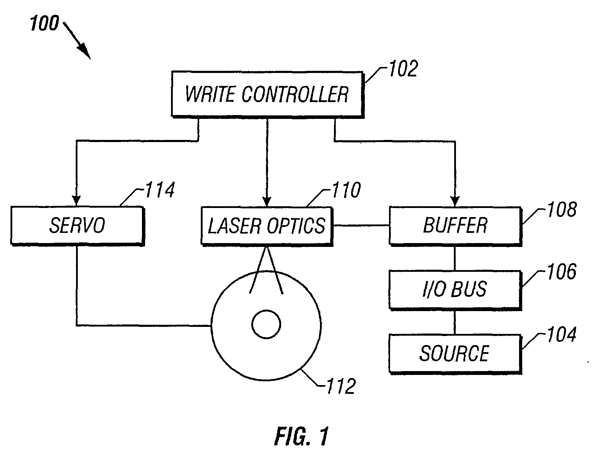

Turning to FIGURE 1, a preferred embodiment of the present invention is shown in block form. In a preferred embodiment, a system 100 comprises a source 104 of data to be written to an optical media. Such source 104 may be a hard drive, network drive, tape drive, disk drive, floppy disk, or any other media that is now known or later developed for storing data to be written to an optical media. Such source 104 may reside locally to system 100, or source 104 may reside remotely, wherein said source 104 may supply data to system 100 via one or more networks including, but not limited to direct PC to PC connection, a local area network (LAN), a wide area network (WAN), modem to modem connection, the Internet, a combination of the above, or any other communications network now known or later developed within the networking arts which permits two or more computers to communicate with each other.

Source 104 supplies data to buffer 108 to be written to an optical media 112 via I/O Bus 106. That is, I/O Bus 106 supplies data from source 104 to buffer 108. System 100 also comprises an encoding circuitry and laser optics 110, which "burns" data from buffer 108 into an optical media 112. System 100 further comprises a servo 114 to spin the optical media 112, which also comprises the servo circuitry to control the servo speed.

Additionally, in a preferred embodiment system 100 further comprises a write controller 102. Write controller 102 monitors the status of buffer 108. In a preferred embodiment, write controller 102 monitors how fast buffer 108 is filling or emptying. That is, write controller 102 monitors the amount of data in buffer 108 and the rate at which data is being supplied to buffer 108 to determine whether buffer 108 is remaining full (e.g., is 100% full) or if it is becoming depleted (e.g., is 75% full or 50% full). Based at least in part on such buffer information, write controller 102 controls the laser optics circuitry 110 and the servo circuitry 114 to decrease the write speed to optical disc 112 in order that buffer 108 can catch up and be replenished with data to avoid a buffer underrun error when necessary, and to increase the write speed when buffer 108 is staying sufficiently full of data.

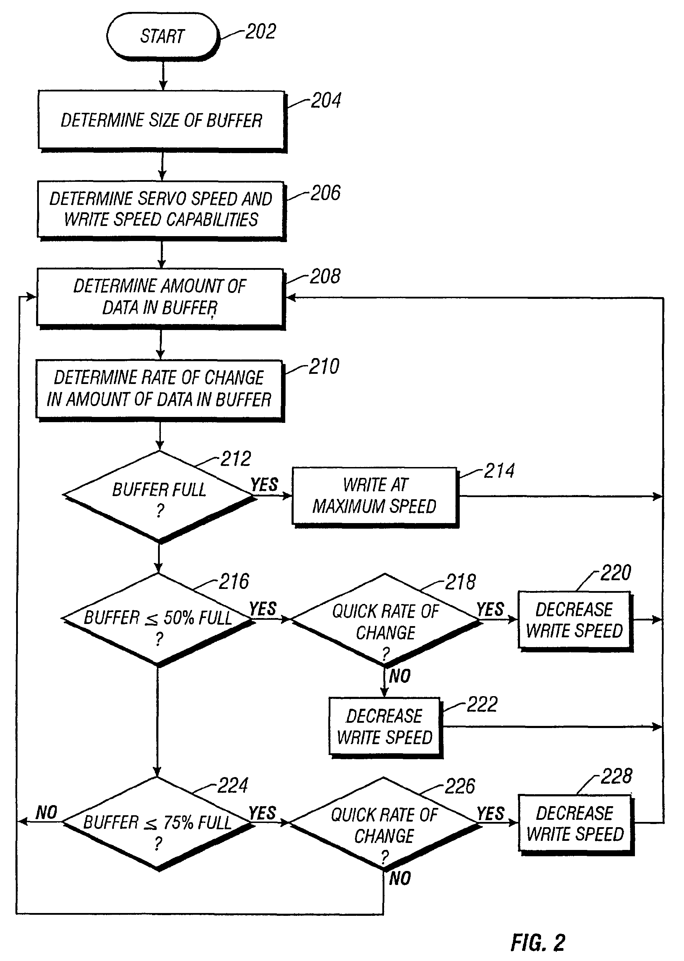

In a preferred embodiment, write controller 102 controls the write speed to optical disc 112 according to an algorithm or heuristic. Such algorithm may be implemented as software code executing to control the write speed, the algorithm may be implemented in hardware circuitry to control the write speed, or the algorithm may be implemented partially in software and partially in hardware to control the write speed. An exemplary flow diagram for an algorithm that is utilized by write controller 102 in a preferred embodiment is illustrated in FIGURE 2. As shown in FIGURE 2, the algorithm starts at block 202. Thereafter, the algorithm determines the size of the buffer 108 being used by the drive at block 204. Typically, the buffer size is 1 to 2 MB. The buffer size may be hard coded into the system since the buffer size typically does not change. At block 206, write controller 102 determines the servo speed and the write speed capabilities of the drive, which can also be hard coded into the system. More specifically, write controller 102 determines the maximum and minimum write speed capabilities of the drive, i.e. how fast and how slow the drive is capable of writing to optical disc 112.

Also at block 206, write controller 102 determines the different step functions available for the drive. For example, suppose write controller 102 determines that the drive is capable of writing at a minimum speed of 1X (150 kilobits per second) and at a maximum speed of 8X (1200 kilobits per second). Write controller 102 also determines the step function capabilities of the drive, i.e. the increments at which the speed may be increased and decreased. So, suppose that the drive of the above-example is capable of writing at 1X, 2X, 4X and 8X speeds. The drive's speed may be incremented and decremented between those speeds at which the drive is capable of writing. Thus, the drive's speed may be adjusted to either the minimum speed of 1X, the maximum speed of 8X, or one of the intermediate speeds of 2X and 4X.

It should be understood that some optical media writer's may be capable of writing at various other speeds, with various other step functions. Continuing with the above example, by altering the firmware of the laser and the servo, the system may be capable of additional write speeds, such as ½ X, 1X, 1 ½ X, etc. Thus, the system may be capable of writing in steps of ½ X. It should be understood that the laser and servo may be implemented to allow the system to write at various other speeds, and any such implementation is intended to be within the scope of the present invention.

At block 208, write controller 102 determines the amount of data in buffer 108. At block 210, write controller 102 determines the rate of change in the amount of data in buffer 108. Write controller 102 determines the rate of change in data being supplied to buffer 108 and data being removed from buffer 108. For example, write controller 102 may use a table that provides the time and the amount of data in buffer 108 to calculate the rate of change of data being supplied and data being removed from buffer 108.

In a preferred embodiment, write controller 102 determines whether to make a drastic change to the drive's write speed or a small change to the write speed based on the rate of change in the data of buffer 108. For example, suppose buffer 108 is completely full (i.e., 100% full) and the drive is writing at its maximum write speed of 4X. Further suppose that buffer 108 immediately drops to only 50% full. Write controller 102 recognizes the drastic change in the amount of data in buffer 108 and immediately decreases the write speed to the drive's minimum write speed of 1X, for example. On the other hand, if buffer 108 slowly drops from 100% full to 50% full, write controller 102 can recognize the slower rate of change in buffer 108 and step down the write speed from the maximum of 4X to an intermediate 2X write speed. Thereafter, write controller 102 can determine whether the drop to 2X write speed is sufficient to allow the data to be fully replenished in buffer 108, or whether the write speed needs to be further reduced to prevent risking a buffer underrun.

Accordingly, in a preferred embodiment write controller 102 functions to ensure that buffer 108 remains as full as possible while writing at the highest speed possible. The goal is to have buffer 108 100% full of data or almost 100% full of data, wherein the drive can write at the fastest speed possible without risking a buffer underrun. It should be understood that some small changes in the amount of data in buffer 108 do not require changing the write speed of the drive. For example, suppose that buffer 108 is 100% full and it drops down to 90% and then comes back up. Such a small change in the amount of data in buffer 108 may not warrant changing the speed of the drive.

Accordingly, in a preferred embodiment thresholds are used to determine the point at which a change in write speed is to be made. In a preferred embodiment, write controller 102 changes the write speed of the drive in response to a very quick drop in buffer 108 to 75% full (or less) or a slower drop in buffer 108 to 50% full (or less). Thus, in a preferred embodiment dropping quickly to 75% or below is one threshold warranting a change in write speed, and dropping more slowly to 50% or below is another threshold warranting a change in write speed. It should be understood that whether the rate of change in the amount of data in buffer 108 is "quick" is determined based on the speed at which the drive is writing. Typically, a drop in data from 100% to 75% in a period of approximately 5 milliseconds is considered a quick change. However, at a slower write speed a longer period of time for the change will be considered a quick rate , whereas at a faster write speed a shorter period of time will be considered a quick change.

The exemplary flow diagram of FIGURE 2 illustrates how an algorithm used by write controller 102 determines whether to decrease the write speed in a preferred embodiment. At step 212, write controller 102 determines whether buffer 108 is full. If the buffer is full, the write speed is set at the maximum speed capable by the drive at block 214. If at block 212 write controller 102 determines that buffer 108 is not full, write controller 102 determines whether buffer 108 is below a threshold amount at block 216. In a preferred embodiment, write controller 102 determines whether buffer 108 is less than or equal to 50% full at block 216. If at block 216 write controller 102 determines that buffer 108 is less than or equal to 50% full, then write controller 102 determines whether buffer 108 dropped at a quick rate of change at block 218. For example, depending on the drive's write speed, write controller 102 may determine whether buffer 108 dropped to 50% full in 10 milliseconds or faster. In a preferred embodiment, if write controller 102 determines that buffer 108 dropped to 50% at a quick rate of change, then write controller 102 decreases the drive's write speed to the minimum speed at which the drive is capable of writing at block 220. However, if write controller 102 determines that buffer 108 dropped to 50% at a slow rate of change, then write controller 102 decreases the drive's write speed to an intermediate speed. In alternative embodiments, write controller 102 reduces the write speed to the minimum speed when buffer 108 falls to 50% full, regardless of the rate of change.

As an example, suppose a system is capable of writing at 1X, 2X, 4X, and 8X speeds. If while writing at 4X speed the buffer quickly drops to 50%, write controller 102 immediately decreases the write speed to the minimum speed of 1X, in a preferred embodiment. On the other hand, if while writing at 4X speed the buffer slowly drops to 50%, write controller 102 decreases the write speed to an intermediate speed of 4X, in a preferred embodiment. Thereafter, write controller 102 continues to monitor buffer 108 to determine whether a further decrease in speed is required. In alternative embodiments, write controller 102 decreases the write speed to the minimum of 1X once buffer 108 drops to the 50% threshold, regardless of the rate of such drop.

If at block 216 write controller 102 determines that buffer 108 is greater than 50% full, the algorithm advances to block 224. At block 224, write controller 102 determines whether buffer 108 is less than or equal to a second threshold amount, e.g., 75% full. If at block 224 write controller 102 determines that buffer 108 is greater than 75% full, the algorithm's operation loops back to block 208 to continue to monitor the amount of data in buffer 108 and the rate at which the data is changing in buffer 108. If at block 224 write controller 102 determines that buffer 108 is less than or equal to 75% full, then write controller 102 determines whether buffer 108 dropped at a quick rate of change at block 226. For example, depending on the drive's write speed, write controller 102 may determine whether buffer 108 dropped to 75% full in 5 milliseconds or faster. In a preferred embodiment, if write controller 102 determines that buffer 108 dropped to 75% at a quick rate of change, then write controller 102 decreases the drive's write speed to the minimum speed at which the drive is capable of writing at block 228. However, if write controller 102 determines that buffer 108 dropped to 75% at a slow rate of change, then the algorithm's operation loops back to block 208 to continue to monitor the amount of data in buffer 108 and the rate at which the data is changing in buffer 108. In alternative embodiments, write controller 102 decrements the drive's write speed to an intermediate speed if determined that buffer 108 dropped to 75% at a slow rate of change at block 226.

In a preferred embodiment, once the write speed is reduced, write controller 102 continues to monitor the amount of data in buffer 108 and the rate of change in such buffer. Write controller 102 monitors buffer 108 to determine whether the amount of data contained therein is increasing up toward 100% full. Once buffer 108 has reached 100% full or some other "safe" threshold (e.g., 90% full), write controller 102 increases the write speed. In a preferred embodiment, write controller 102 monitors the rate at which buffer 108 is replenished to 100% (or some other threshold amount). If buffer 108 replenishes to 100% at a very quick rate, then write controller 102 increases the write speed to the maximum speed at which the drive is capable of writing. However, if buffer 108 replenishes to 100% at a slow rate, then write controller 102 gradually increases the write speed. For example, write controller 102 may increase the write speed by 1 step function, then monitor buffer 108 before increasing the write speed by another step function, until either the maximum write speed that does not adversely affect buffer 108 or the maximum write speed at which the drive is capable is achieved.

Embodiments of the present invention may be better understood in conjunction with the following examples. As a first example, suppose a user desires to write 150 MB to an optical disc using a system that is capable of writing at 1X, 2X, 4X and 8X. Thus, the system's minimum write speed is 1X and its maximum write speed is 8X. Further suppose that step functions for the system are 1X, 2X, 4X and 8X. Thus, the system is not capable of writing at 1 ½ X speed, or any speed other than 1X, 2X, 4X arid 8X. Further assume that the buffer is 1 MB in size. The drive will typically wait for the 1 MB buffer to be filled before starting to write data to the optical disc. Once the buffer is full, the drive will begin writing data from the buffer to the optical disc. In a preferred embodiment, the drive begins writing data to the optical disc at the maximum speed at which the drive is capable of writing, 8X. Thereafter, the write controller monitors the amount of data in the buffer and the rate of change in the data in the buffer.

Continuing with the above example, assume that after writing 125 MB to the optical disc, something causes the rate at which data is being supplied from the source to the buffer to decrease. For example, some other process executing on the system may require processor time, resulting in a decrease in the rate at which data is being supplied from the source to the buffer. Accordingly, data is being written from the buffer to the optical disc at 8X speed, but is being supplied to the buffer at a much slower rate. Assume that the rate at which data is being supplied to the buffer is so slow that the buffer drops to only 50% full in less than 5 milliseconds time. In a preferred embodiment, the write controller recognizes such a drastic decrease at such a fast rate, and in response, the write controller causes the drive's write speed to immediately decrease to the minimum speed, 1X. That is, the write controller interacts with the laser optics and the servo to immediately decrease the write speed to 1X. If the drive were capable of writing at an even slower speed, e.g. ½ X, the write controller would decrease the drive's speed to such slower speed in a preferred embodiment.

By decreasing the speed to the minimum write speed, it is hoped that the rate at which data is being written from the buffer will be slow enough that a buffer underrun will be avoided and that the buffer will be replenished with a safe level of data (e.g., 100% full). After decreasing the write speed, the write controller continues to monitor the amount of data and the change rate for the buffer. Once the write controller recognizes that the amount of data and change rate for the buffer have reached a sufficiently safe level (i.e., to avoid a buffer underrun), the write controller increases the write speed. Suppose that after decreasing the write speed to the drive's minimum, the buffer increases at a very fast rate (e.g., 5 milliseconds) back to 100% full. In a preferred embodiment, the write controller recognizes the rapid increase to the safe level (100% full) and immediately increases the write speed to the maximum speed of 8X. That is, the write controller may recognize that data is now being supplied to the buffer at a sufficiently fast rate to allow the write speed to be increased to the maximum speed. In alternative embodiments, the write controller gradually increases the write speed to intermediate levels, such as 2X and 4X speeds, before increasing to the maximum speed.

Continuing with the above example, suppose that after decreasing the write speed to the drive's minimum, the buffer increases at a slow rate back to a sufficiently safe level (e.g., 100% full). In a preferred embodiment, the write controller recognizes the gradual increase to the safe level, and thus gradually increases the write speed. That is, once the buffer reaches 100% full (or some other sufficiently safe level), the write controller begins gradually increasing the write speed to try to avoid causing another drop in the amount of data in the buffer. Because the amount of data increased gradually to the safe level, it is possible that the buffer is still not being supplied data at a fast enough rate to increase the write speed to the maximum speed. Thus, the write controller increases the write speed from 1X to 2X and monitors the buffer's reaction. If the buffer remains at a sufficiently high level, the write controller will then increase to 4X, and then eventually to 8X when the buffer is being supplied data at a fast enough rate to allow such a write speed.

As a second example, suppose a user desires to write 150 MB to the same system used in the first example, i.e. a system capable of writing at 1X, 2X, 4X and 8X speeds. Assume that after writing 125 MB to the optical disc, something causes the rate at which data is being supplied from the source to the buffer to decrease. For example, some other process executing on the system may require processor time, resulting in a decrease in the rate at which data is being supplied from the source to the buffer. Accordingly, data is being written from the buffer to the optical disc at 8X speed, but is being supplied to the buffer at a slower rate. Assume that the rate at which data is being supplied to the buffer is such that the buffer drops to 75% full in less than 5 milliseconds time. In a preferred embodiment, the write controller recognizes such a drastic decrease at such a fast rate, and in response the write controller causes the drive's write speed to immediately decrease to the minimum speed, 1X. That is, the write controller interacts with the laser optics and the servo to immediately decrease the write speed to 1X. If the drive were capable of writing at an even slower speed, e.g. ½ X, the write controller would decrease the drive's speed to such slower speed in a preferred embodiment. In alternative embodiments, the write controller may respond to a drastic drop to the 75% level by decreasing the write speed to an intermediate speed, such as 4X or 2X.

On the other hand, suppose that the buffer drops to 75% full at a much slower rate, such as over the course of 2 or 3 seconds. In one embodiment, the write controller does not adjust the write speed in response to such a slow drop to 75% full. That is, the write controller may assume that such a slow drop to 75% does not present a danger of a buffer underrun and that the buffer will likely replenish itself without requiring a decrease in write speed. Although, it should be noted from the above example, that if the drop continues to a minimum threshold amount, such as 50%, then the write controller will adjust the write speed. In another embodiment, the write controller adjusts the write speed to an intermediate speed, such as 4X speed, in response to the slow drop to 75%. In this embodiment, the write controller assumes that because the amount of data in the buffer has dropped slowly that a small decrease in the write speed may allow the buffer to replenish itself without requiring a decrease to the minimum write speed. In still another embodiment, the write controller decreases the write speed to the minimum write speed to try to ensure that the buffer will be replenished before incurring a buffer underrun.

Thus, in a preferred embodiment the write speed to an optical media is varied dynamically based upon the amount of data in buffer 108 and the rate at which such data is changing. In alternative embodiments, write controller 102 adjusts the write speed based upon the amount of data in buffer 108, without regard to the rate of change in the data in buffer 108. As an example of such an alternative embodiment, suppose that a system is capable of writing at 1X, 2X, 4X, and 8X speeds. Further suppose that one threshold is set at 75%, another threshold is set at 63%, and still another threshold is set at 50%. Assume that the amount of data in buffer 108 drops to 75% full. In response, write controller 102 decreases the write speed to an intermediate speed of 4X. Assume that the data continues to drop to the 63% full level. In response to the 63% threshold being achieved, write controller 102 further decreases the write speed to the 2X write speed. Assume that the data continues to drop to the 50% full level. In response to the 50% threshold being achieved, write controller 102 further decreases the write speed to the minimum 1X write speed. From this example, it will be appreciated that various other implementations are available for varying the write speed based on the amount of data in buffer 108, without regard to the rate of change in such data.

It will be appreciated that the threshold amounts discussed above may be any percentages or numbers reflecting the amount of data contained within the buffer, and the present invention is not intended to be limited only to the 75% and 50% thresholds. Rather, other thresholds for the amount of data in the buffer may be utilized for determining whether the write speed should be adjusted, and any such threshold is intended to be within the scope of the present invention. The present invention is not intended to be limited only to those thresholds provided herein for determining whether the write speed should be adjusted, rather such thresholds are intended as examples that render the disclosure enabling for many other thresholds for determining whether the write speed should be adjusted.

It should be further appreciated that additional threshold amounts other than those disclosed above may be incorporated into an implementation of the present invention, and the present invention is intended to encompass any such implementations having additional. For example, three thresholds may be used for monitoring the buffer and determining whether a change in write speed is required, such as 85% full, 70% full, and 55% full. On the other hand, it should also be understood that a single threshold amount may be incorporated into an implementation of the present invention, and the present invention is intended to encompass any such implementations having only one threshold. For example, one threshold may be used for monitoring the buffer and determining whether a change in write speed is required, such as 50% full.

It should be recognized that at some point source 104 may reach the end of the data that it is supplying to buffer 108 to be written to optical disc 112. Thus, as the end of the data is reached by source 104, source 104 may stop providing further data to buffer 108. That is, as the natural end of the data to be written from source 104 to optical disc 112 is reached, no further data is supplied from source 104 to buffer 108. In this circumstance, it is natural for buffer 108 to begin to empty, as no further data is being supplied from source 104 to buffer 108. Accordingly, in a preferred embodiment, the write controller may not always decrease the write speed to the optical disc 112 when the buffer begins to empty. Suppose for example that 100 MB is being written from source 104 to an optical disc 112. As the end of the 100 MB is supplied to the buffer 108, no additional data will be supplied thereto from source 104, i.e., the end of the data is reached. Most preferably, when the buffer 108 begins to empty because the end of the data being supplied by source 104 has been reached, the write controller does not decrease the write speed to the optical disc 112 in an attempt to prevent a buffer underrun, but instead maintains its write speed in order to empty the end portion of the data from the buffer 108 to the optical disc 112 in an efficient manner. Thus, in a most preferred embodiment, the write controller 102 recognizes that the end of the data being supplied from source 104 to buffer 108 has been reached, and therefore does not decrease the write speed in an attempt to prevent a buffer underrun at the end of the write of the data.

It should also be understood that in one embodiment of the present invention the write speed is adjusted based on the amount of data in the buffer, without regard to the rate of change in the data.

It should be further understood that in another embodiment of the present invention the write speed is adjusted based on both the amount of data in the buffer and the rate of change in the data.

It should also be understood that rates other than the rates used in the above discussion for determining a quick or fast rate of change in data are provided for exemplary purposes only. Other rates may be utilized for determining whether a rate of change in data is fast, and any such rate is intended to be within the scope of the present invention. The present invention is not intended to be limited only to the rates provided herein for determining whether a change in data is fast, rather such rates are intended as examples that render the disclosure enabling for many other rates for determining whether a change in data is fast.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method of writing data to an optical media, wherein the speed at which said data is written to said optical media is variable, the method comprising:
receiving data in a buffer 108 from a source 104;
writing data from said buffer to an optical media 112 at a determined speed; and
dynamically adjusting said determined speed of said writing said data to said optical media.

2. The method of claim 1 wherein said optical media 112 is selected from the group consisting of:
Compact Disc (CD), Digital Versatile Disc (DVD), and laser disc.

3. The method of claim 1 further comprising:
determining the amount of data in said buffer 108; and
dynamically adjusting said determined speed of said writing based at least in part on said amount of data in said buffer.

4. The method of claim 1 further comprising:
determining the rate at which said data is being received in said buffer 108 from said source; and
dynamically adjusting said determined speed of said writing based at least in part on the rate at which said data is received in said buffer.

5. The method of claim 1 further comprising:
determining the amount of data in said buffer 108;
determining the rate at which said data is being received in said buffer from said source 104; and
dynamically adjusting said determined speed of said writing based at least in part on the amount of data in said buffer and the rate at which said data is received in said buffer.

6. The method of claim 3 further comprising:
decreasing said determined speed of said writing if said amount of data is below a threshold amount.

7. A system for writing data to an optical media, wherein the speed at which said data is written to said optical media is variable, comprising:
a means 108 for storing data to be written to an optical media 112;
a means 114 for controlling the speed of rotation of said optical media;
a means 110 for writing data to said optical media; and
a means 102 for controlling the speed of writing to said optical media, wherein said means for controlling dynamically adjusts said speed of writing to said optical media.

8. The system of claim 7 further comprising:
said means for controlling monitors the amount of data in said means for storing;
said means for controlling monitors the rate at which data is being supplied to said means for storing; and
said means for controlling adjusts the speed of writing to said optical media based at least in part on said amount of data in said means for storing and said rate at which data is being supplied to said means for storing.

9. A system for writing data to an optical media, wherein the speed at which said data is written to said optical media is variable, comprising:
a buffer 108, wherein said buffer stores data to be written to an optical media 112;
a servo 114, wherein said servo controls the speed of rotation of said optical media;
a laser optics 110, wherein said laser optics writes data to said optical media; and
a write controller 102, said write controller controls the speed of writing data to said optical media, wherein said write controller dynamically adjusts said speed of writing data to said optical media.

10. The system of claim 9 wherein said write controller monitors the rate at which data is being supplied to said buffer 108 and adjusts the speed of writing to said optical media based at least in part on said rate.
